# EUROPEAN PATENT SPECIFICATION

(11) **EP 2 175 095 B1**
(45) Date of publication and mention of the grant of the patent: **21.11.2012**
(21) Application number: 09252390.1
(22) Date of filing: 09.10.2009
(51) Int. Cl.: E05C 9/00, F16B 2/18

(54) **Attachment device**
Anbringungsvorrichtung
Dispositif de fixation

(30) Priority: 10.10.2008 GB 0818648
(43) Date of publication of application: 14.04.2010
(73) Proprietor: SECURISTYLE LIMITED, Cheltenham, Gloucestershire GL51 7RE (GB)
(72) Inventor: Rowe, David Thomas, Cheltenham, Gloucestershire GL51 7RE (GB)
(74) Representative: Jackson, Richard Eric

(56) References cited:
- EP-A2- 1 061 217
- WO-A1-2007/147503
- DE-A1- 3 001 025
- DE-A1- 10 345 758
- GB-A- 1 051 265
- US-A- 3 319 510
- US-A- 3 875 843

## Description

### Field of the Invention

The present invention relates to an assembly for connecting a first component to a second component.

### Background of the Invention

Espagnolette type locks are often used for securing windows and doors. Usually the fitment of the gearbox used in these types of locks to a window or door is undertaken at the same time as a window handle is installed. This usually occurs at the building site, rather than at the point at which when the window is fabricated, as handles are often suited to a specific building or room. It is difficult to supply a window which has been fabricated with a lock in place as, without a fitted handle, the lock is not securely positioned. It is also difficult to ensure that the lock is in the correct position.

It is therefore desirable to provide an assembly which can be used to secure a window lock gearbox to a window, without requiring retaining screws or the attachment of a handle. There is a need for an assembly to hold temporarily a gearbox firmly in position against the window profile from the point at which the window is fabricated to the point at which it is installed. It is also desirable that the gearbox remains firmly in place and does not move as the handle is fitted to it and the final fitment of the gearbox to the window lock is completed.

WO 2007/147503 discloses an attachment device according to the pre-characterising part of claim 1 hereinafter.

### Summary of the Invention

According to the present invention, there is provided an assembly device according to claim 1 hereinafter.

Preferably the assembly includes two cams and each cam is individually rotatable.

The camming faces of each cam may have a tooth form which allows the cam component to rotate in one direction and prevents the cam from rotating in the opposite direction.

Preferably the cam has a spigot. The spigot of the cam may have a screw thread disposed therein.

The cam can be connectable to the first component by peening. In the case where the assembly includes a moulding, the cam may be connectable to the first component by a clip formed on the moulding.

Preferably the cam is adjustable from the side opposite its camming face.

When the second component is the vent profile of a window, the vent profile may have a T-shaped slot extending along its length. When The moulding, can be dimensioned to fit neatly inside the T-shaped slot.

The moulding may be a plastics injection moulding.

A further aspect of this invention provides a window assembly having a handle and an assembly including a first component and a cam. In this aspect of the invention, the first component is a window gearbox and the second component is a window, the window having a vent profile. In this aspect the handle may be connectable to the cam component.

This invention also provides a method for securing a first component to a second component as defined in claim 13 hereinafter.

### Brief Description of Drawings

One or more embodiments of the present invention are described below with reference to the accompanying drawings, in which:-
Fig. 1 shows a perspective view of an embodiment of an assembly of the present invention
Fig. 2 shows a view of a moulding and cam of fig. 1.
Fig. 3 shows a perspective view of an embodiment of an assembly of the present invention mounted on a vent profile.
Fig. 4 shows a perspective view of the embodiment of fig. 1 in an assembled configuration, prior to installation.
Fig. 5 shows a schematic sectioned end view of an embodiment of an assembly of the present invention mounted on a vent profile but not yet fixed.
Fig. 6 shows a perspective view of the embodiment of fig. 1 in an assembled configuration with cams rotated to a second position.
Fig. 7 shows a schematic sectioned end view of an embodiment of an assembly of the present invention, fixed on a vent profile.
Fig. 8 shows a perspective view of a cam of the present invention.
Fig. 9 shows a perspective view of a moulding of the present invention.
Fig. 10 shows a top view of the recess of the moulding of the present invention.

### Detailed Description

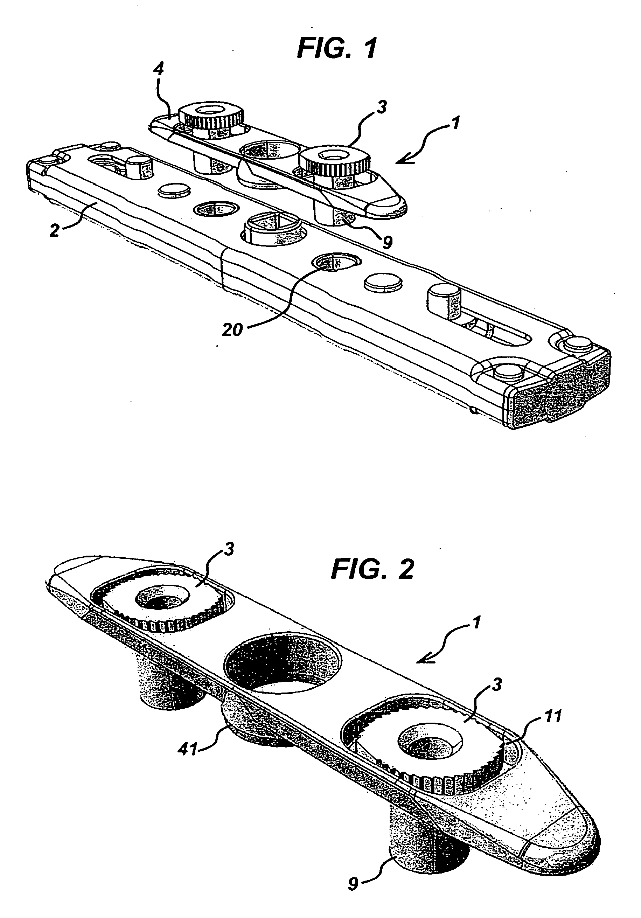

Figure 1 shows a mechanism 1 for attaching a first component to a second component. The first component is in the form of a window lock gearbox 2 such as a gearbox for an espagnolette locking mechanism. Two cams 3 are also shown, along with a moulding 4 which, together, form the mechanism 1. The cams 3 are formed with shafts which engage the gearbox 2 and pass through the moulding 4 to connect the moulding 4 to the gearbox 2. In accordance with the present invention, at least one cam 3 is used in connection with the gearbox 2; as shown, more than one cam 3 is ideally used to provide a more secure connection between the gearbox 2 and the second component.

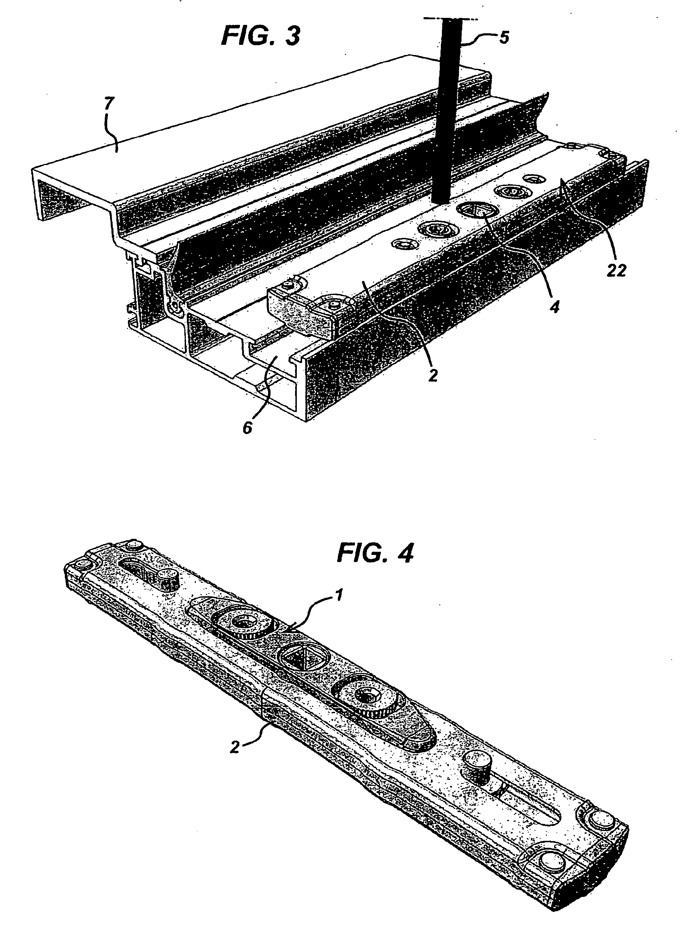

Figure 2 shows the cams 3 in connection with the moulding 4 in more detail. Recesses 11 are present in the moulding 4 and are sized and shaped so that when the cam 3 is in a first position, as shown in figure 4, the recess 11 corresponds to the shape of the face of the cam 3. The cams 3 have spigots or shafts 9 which can be inserted through apertures 10 disposed in the recesses 11. The moulding 4 is made of a material which retains its structure when a force applies to it and will expand in the direction that the force is applied in. The moulding 4 can be a plastics injection moulding.

The mechanism 1 can be secured to the gearbox 2 by securing the moulding 4 to the gearbox using a clip 41 extending from the moulding 4. The gearbox 2 has apertures 20 through which the spigots or shafts 9 of the cams 3 can be inserted. Alternatively, and as shown, the cam 3 can be connected to the gearbox 2 by pushing the spigot or shaft 9 of the cam 3 through the aperture 20 in the gearbox 2 and peening it back over against the back plate 22 of the gearbox 2. This ensures that the gearbox 2 and the cam 3 are secured together before they are placed into a second component 7.

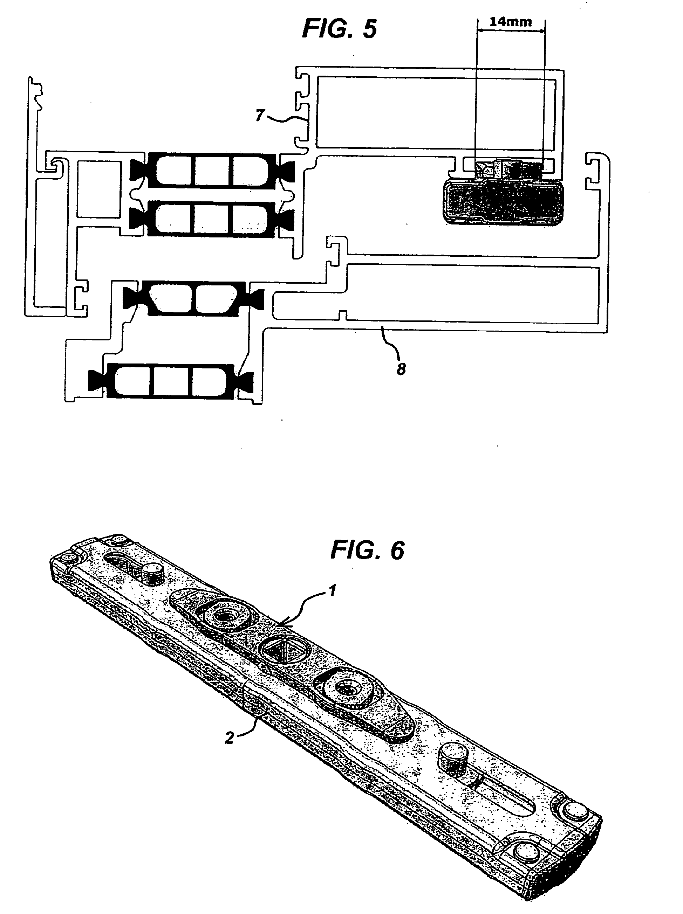

Figure 3 shows the second component, in the form of a window vent profile 7, with the gearbox 2 connected to it. The window vent profile 7 is shaped and dimensioned to receive a first component, such as a window lock gearbox 2. In the embodiment shown, the vent profile 7 has a T-shaped slot 6 extending along its length. The moulding 4 is sized and shaped so that it can be fitted into the slot 6 of the vent profile 7 as seen in figure 5. The moulding 4 is interchangeable, so that different mouldings can be fitted to the gearbox 2 ensuring that the gearbox 2 is connectable to a number of different sized grooves regardless of the size of the gearbox 2. This means that a standard sized first component such as a gearbox 2 can be connected to a number of differing vent profile sizes.

Other components (not shown) will be connected to the gearbox 2 and run in the slot 6, such as drive bars, corner drives, slide bars, etc. As seen in figure 5, the moulding 4, connected to the gearbox 2, is inserted into the slot 6 of the vent profile 7 so that the back plate 22 of the gearbox 2 is visible once the attachment mechanism 1 has been inserted into the slot 6. When the moulding 4 is inserted into the slot 6, the cams 3 are accessible via the apertures 20 which extend through to the back plate 22 of the gearbox 2. The cams 3 can therefore be adjusted when the gearbox 2 has been placed into position on the vent profile 7. A 5mm hex drive 5 may be used to rotate the cams 3 individually, though of course other methods of rotating the cams 3 may be used.

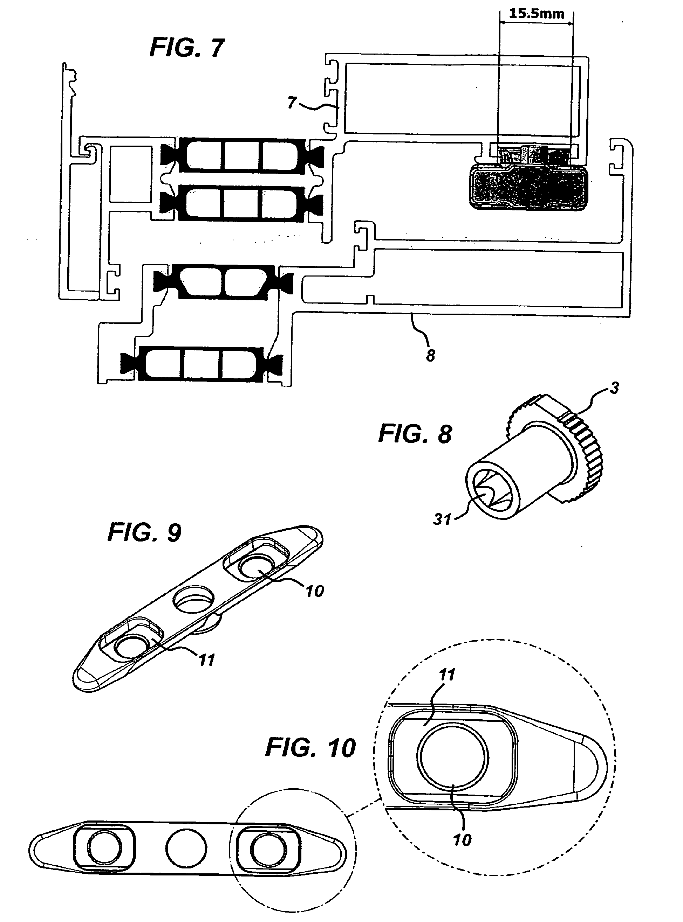

Figure 4 shows the assembly of the present invention with the cam in a first position. Figure 5 shows this assembly, with the cam 3 still in the first position, after the moulding 4 has been inserted into the vent profile 7. Figure 6 shows the cam 3 in a second position. As the cam 3 is rotated, the face of the cam 3 rotates within the recess 11 of the moulding 4. The recess 11 is sized such that, as the face of the cam 3 rotates into a second position, the face of the cam comes into contact with, and applies a force to, the walls of the recess 11. These forces cause the width of the moulding 4 to expand by up to 2mm, thereby clamping the edges of the moulding 4 against the slot 6 of the vent profile 7 as shown in figure 7.

Although not claimed in this application, the mechanism 1 may not comprise a moulding and the gearbox 2 may have recesses disposed therein, which are sized so that they correspond to the shape of the face of the cam 3 in a first position. The cam 3 can then be inserted directly into the gearbox 2. In the same way as above, the cam 3 can be connected to the gearbox 2 by pushing the spigot 9 of the cam 3 through aperture 20 in the gearbox 2 and peening it over the back plate 22 of the gearbox 2. Alternatively the cam 3 may be integrally formed with the gearbox 2.

In this second embodiment (not shown), the cam 3 is directly connected to the gearbox 2, with no intermediate moulding. The vent profile 7 is sized and shaped to receive the first component, preferably in a slot 6 extending along its length. As in the first embodiment, the back plate 22 of the gearbox 2 is visible once the gearbox 2 is inserted into the slot 6 of the vent profile 7 and the cams 3 are accessible via the apertures 20 which extend through to the back plate 22 of the gearbox 2. In this aspect, as the cam 3 is rotated and the face of the cam 3 moves from a first position to a second position in the recess 11, similar to the first position and second position of the cam 3 in the first embodiment as shown in figures 4 and 6 respectively, the cam 3 causes the gearbox 2 to expand, in the same way as the moulding 4 is caused to expand in the first embodiment, thereby clamping the edges of the gearbox 2 against the slot 6 of the vent profile 7.

The face of the cam 3 has a tooth form that allows the cam 3 to rotate relatively freely in one direction but bites into the moulding 4 or the gearbox 2 if rotated in the other direction. This stops the cam 3 from loosening off during transit and thereby ensures that the gearbox 2 will not become disconnected from the vent profile 7 during transit or at any other point before the gearbox 2 is permanently fixed to the vent profile 7.

As shown in figure 8, the spigots 9 of the cam 3 may have internal threads 31. A handle may be attached to the gearbox 2 using the cams 3 by passing a retaining screw through the handle back plate, through the vent profile 7 and into the cam thread 31. When the screw is tightened the cams 3 are forced to rotate further, tightening the moulding 4 or the gearbox 2 against the edges of the slot 6 of the vent profile 7; this ensures the gearbox 2 is centred with respect to the slot 6 and is in the correct position as the handle is attached.

In a first method of this invention, the cams 3 are passed through apertures 10 in the moulding 4, and then through corresponding apertures 20 in a gearbox 2 as shown in figure 1. The cam faces 3 sit in a recess 11 disposed in the moulding 4. The moulding 4 is attached to the gearbox 2 using a clip 41 on either one of the moulding or the gearbox 2 having a snap-fit connection to the other one of the moulding 4 or gearbox 2. Alternatively the cam 3 is fixed to the gearbox 2 by peening a shaft 9 of the cam 3 to the back plate 22 of the gearbox 2. The vent profile 7 contains a slot 6 which is shaped and dimensioned to receive the moulding 4. The back plate 22 of the gearbox 2 faces out of the vent profile 7 and the cams 3 are accessible via the apertures 20 which extend through to the back plate 22 of the gearbox 2. The cams 3 are then adjusted individually from the back plate 22 of the gearbox 2. The cams 3 are rotated, forcing the edges of the cams 3 against the walls of the recess 11 of the moulding 4. The width of the moulding 4 expands by up to 2mm, clamping the moulding 4 against the edges of the slot 6 of the vent profile 7 and, because the gearbox 2 is securely attached to the moulding 4, connects the gearbox 2 to the vent profile 7 without the need for screws.

Alternatively, at least one cam 3 is connected directly to the gearbox 2. This is done by inserting the cam 3 through an aperture 21 of the gearbox 2 and peening a spigot 9 of the cam 3 to the back plate 22 of the gearbox 2. The gearbox 2 is then inserted into a slot 6 in the vent profile 7 which is shaped and dimensioned to receive the gearbox. The back plate 22 of the gearbox 2 faces out of the vent profile 7 and the cams 3 are accessible from the apertures 20 which extend through to the back plate 22 of the gearbox 2. The cams 3 can therefore be adjusted individually from the back plate 22 of the gearbox.

As a cam 3 is rotated, forcing the edges of the cam 3 against the surface of the recesses of the gearbox, the width of the gearbox expands by up to 2mm, clamping the gearbox against the edges of the slot 6 of the vent profile 6 and connecting the gearbox 2 to the vent profile 7.

It will of course be understood that the present invention has been described above purely by way of example, and that modifications of detail can be made within the scope of the invention.

## Claims

1. An assembly (1) for connecting a gearbox for a window (2) to a vent profile of a window (7) comprising:
a gearbox for a window (2), a moulding (4) and a cam (3);
**characterised in that**
the cam (3) is within a recess (11) in the moulding (4), the cam (3) and moulding (4) are connectable to the gearbox(2) and wherein, when the cam is rotated to apply force to walls of the recess (11) such that the width of the moulding (4) is expanded, the gearbox (2) can be connected to the vent profile (7).

2. The assembly of claim 1, wherein the assembly includes two or more cams (3).

3. The assembly of claim1 or claim 2, wherein camming faces of each cam (3) has a tooth form which allows the cam (3) to rotate in one direction and prevents the cam (3) from rotating in the opposite direction.

4. The assembly of any of the preceding claims, wherein each cam (3) has a spigot (9) for engaging the gearbox(2).

5. The assembly of claim 4, wherein the spigot (9) of the cam (3) has a screw thread (31) disposed therein.

6. The assembly of any of the preceding claims, wherein the cam (3) is adjustable from the side of the moulding (4) opposite the camming face.

7. The assembly of any one of the preceding claims, wherein the vent profile (7) of a window incorporates a T-shaped slot along its length.

8. The assembly of claim 7, wherein the moulding (4) is dimensioned to fit inside the T-shaped slot.

9. The assembly of any one of the preceding claims, wherein the moulding is a plastics injection moulding.

10. A window assembly comprising:
an assembly (1) according to claim 1; and
a handle.

11. The window assembly of claim 10, wherein the handle is connectable to the cam (3).

12. A method for connecting a gearbox for a window (2) to a vent profile of a window (7) comprising the steps of:
providing a gearbox for a window (2);
connecting the gearbox (2) to a moulding (4) having a cam (3) within a recess (11);
connecting the gearbox (2) to the vent profile (7) by rotating the cam (3) to apply force to walls of the recess (11) such that the width of the moulding (4) expands.

## Patentansprüche

1. Aufbau (1) zur Verbindung eines Getriebes für ein Fenster (2) mit einem Flügelprofil eines Fensters (7), umfassend:
ein Getriebe für ein Fenster (2), ein Formteil (4) und eine Nocke (3);
**dadurch gekennzeichnet, dass**
sich die Nocke (3) in einer Aussparung (11) in dem Formteil (4) befindet, die Nocke (3) und das Formteil (4) mit dem Getriebe (2) verbindbar sind, und wobei das Getriebe (2) dann, wenn die Nocke gedreht wird, um eine derartige Kraft auf Wände der Aussparung (11) auszuüben, dass die Breite des Formteils (4) ausgedehnt wird, mit dem Flügelprofil (7) verbunden werden kann.

2. Aufbau nach Anspruch 1, wobei der Aufbau zwei oder mehr Nocken (3) umfasst.

3. Aufbau nach Anspruch 1 oder Anspruch 2, wobei Eingreifflächen jeder Nocke (3) eine Zahnform aufweisen, die der Nocke (3) eine Drehung in eine Richtung gestattet und die Nocke (3) an einer Drehung in die entgegengesetzte Richtung hindert.

4. Aufbau nach einem der vorhergehenden Ansprüche, wobei jede Nocke (3) einen Zapfen (9) zum Eingriff mit dem Getriebe (2) aufweist.

5. Aufbau nach Anspruch 4, wobei der Zapfen (9) der Nocke (3) ein darin angeordnetes Schraubgewinde (31) aufweist.

6. Aufbau nach einem der vorhergehenden Ansprüche, wobei die Nocke (3) von der Seite des Formteils (4), die der Eingreiffläche gegenüberliegt, einstellbar ist.

7. Aufbau nach einem der vorhergehenden Ansprüche, wobei das Flügelprofil (7) eines Fensters entlang seiner Länge einen T-förmigen Schlitz umfasst.

8. Aufbau nach Anspruch 7, wobei das Formteil (4) so in der Größe bemessen ist, dass es in das Innere des T-förmigen Schlitzes passt.

9. Aufbau nach einem der vorhergehenden Ansprüche, wobei das Formteil ein Kunststoffspritzguss-Formteil ist.

10. Fensteraufbau, umfassend:
einen Aufbau (1) nach Anspruch 1; und
einen Griff.

11. Fensteraufbau nach Anspruch 10, wobei der Griff mit der Nocke (3) verbunden werden kann.

12. Verfahren zum Verbinden eines Getriebes für ein Fenster (2) mit einem Flügelprofil eines Fensters (7), umfassend die folgenden Schritte:
Bereitstellen eines Getriebes für ein Fenster (2);
Verbinden des Getriebes (2) mit einem Formteil (4), das in einer Aussparung (11) eine Nocke (3) aufweist;
Verbinden des Getriebes (2) mit dem Flügelprofil (7) durch Drehen der Nocke (3), um eine derartige Kraft auf Wände der Aussparung (11) auszuüben, dass sich die Breite des Formteils (4) ausdehnt.

## Revendications

1. Ensemble (1) conçu pour relier une boîte de vitesses de fenêtre (2) à un profilé de ventilation de fenêtre (7) comprenant :
une boîte de vitesses de fenêtre (2), une moulure (4) et une came (3) ;
**caractérisé en ce que**
la came (3) est dans une cavité (11) ménagée dans la moulure (4), la came (3) et la moulure (4) pouvant être reliées à la boîte de vitesses (2) et **en ce que**, quand la came est entraînée en rotation pour appliquer une force aux parois de la cavité (11) de manière à ce que la largeur de la moulure (4) augmente, la boîte de vitesses (2) peut être reliée au profilé de ventilation (7).

2. Ensemble selon la revendication 1, ledit ensemble comprenant deux cames (3) ou plus.

3. Ensemble selon la revendication 1 ou la revendication 2, dont les faces de contact de chaque came (3) sont en forme de dentures ce qui a pour effet de permettre à la came (3) de tourner dans une direction et d'empêcher la came (3) de tourner dans la direction opposée.

4. Ensemble selon l'une quelconque des revendications précédentes, dont chaque came (3) est dotée d'un goujon (9) pour l'accouplement à la boîte de vitesses (2).

5. Ensemble selon la revendication 4, dont le goujon (9) de la came (3) est doté d'un filetage (31) pratiqué sur celui-ci.

6. Ensemble selon l'une quelconque des revendications précédentes, dont la came (3) est réglable par le côté de la moulure (4) opposé à la face de contact de la came.

7. Ensemble selon l'une quelconque des revendications précédentes, dont le profilé de ventilation (7) de fenêtre comporte une encoche en forme de T ménagée sur sa longueur.

8. Ensemble selon la revendication 7, dont la moulure (4) est dimensionnée de façon à s'adapter à l'intérieur de l'encoche en forme de T.

9. Ensemble selon l'une quelconque des revendications précédentes, dont la moulure est une pièce en matière plastique moulée par injection.

10. Ensemble de fenêtre comprenant :
un ensemble (1) selon la revendication 1 ; et une manette.

11. Ensemble de fenêtre selon la revendication 10, dont la manette peut être reliée à la came (3).

12. Procédé pour relier une boîte de vitesses de fenêtre (2) à un profilé de ventilation de fenêtre (7) comprenant les étapes consistant à :
monter une boîte de vitesses de fenêtre (2) ;
relier la boîte de vitesses (2) à une moulure (4) comportant une came (3) disposée dans une cavité (11) ;
relier la boîte de vitesses (2) au profilé de ventilation (7) en faisant tourner la came (3) pour appliquer une force aux parois de la cavité (11) de manière à ce que la largeur de la moulure (4) augmente.
